# EUROPÄISCHE PATENTSCHRIFT

(11) **EP 3 113 439 B1**
(45) Veröffentlichungstag und Bekanntmachung des Hinweises auf die Patenterteilung: **26.04.2017**
(21) Anmeldenummer: 15174558.5
(22) Anmeldetag: 30.06.2015
(51) Int. Cl.: H04L 29/06

(54) **VERFAHREN ZUR HERSTELLUNG EINER "ZERO KNOWLEDGE"-VERBINDUNG ZWISCHEN EINEM ELEKTRONISCHEN GERÄT UND EINEM COMPUTER**
METHOD FOR PRODUCING A ZERO KNOWLEDGE CONNECTION BETWEEN AN ELECTRONIC DEVICE AND A COMPUTER
PROCEDE DE FABRICATION D'UNE LIAISON DE « CONNAISSANCE NULLE » ENTRE UN APPAREIL ELECTRONIQUE ET UN ORDINATEUR

(43) Veröffentlichungstag der Anmeldung: 04.01.2017
(73) Patentinhaber: SKIDATA AG, 5083 Grödig/Salzburg (AT)
(72) Erfinder: Keyser, York, 5023 Salzburg (AT)
(74) Vertreter: Karakatsanis, Georgios

(56) Entgegenhaltungen:
- EP-A1- 1 737 194
- US-A1- 2007 118 745

## Beschreibung

Die Erfindung betrifft ein Verfahren zur Herstellung einer "Zero Knowledge"-Verbindung zwischen einem elektronischen Gerät und einem Computer gemäß dem Oberbegriff des Patentanspruches 1.

Eine "Zero Knowledge"-Verbindung im Sinne der Erfindung ist eine Verbindung zur Datenkommunikation zwischen einem elektronischen Gerät und einem Computer, beispielsweise dem Notebook eines Technikers, bei der sicherheitsrelevante Daten wie RSA-Keys bzw. Krypto-Schlüssel, die den aktuellen Sicherheitsstandards entsprechen und Passwörter nicht manuell eingegeben werden müssen und dem Benutzer des Computers nicht bekannt sind.

Aus dem Stand der Technik ist bekannt, zur Wartung oder zur Konfiguration eines elektronischen Gerätes, beispielsweise eines Verkaufsautomaten oder einer Zugangskontrollvorrichtung, eine direkte Verbindung zwischen dem Computer eines Technikers und dem zu konfigurierenden Gerät herzustellen. Eine direkte Verbindung ist erforderlich, da die Firewall im Netzwerk, an das das zu konfigurierende Gerät angeschlossen ist, umgangen werden soll, um auf das elektronische Gerät zugreifen zu können.

In der Regel erfolgt die Verbindung zwischen dem Computer und dem elektronischen zu konfigurierenden Gerät mittels des SSH-Protokolls (Secure Shell Protocol), welches eine manuelle Konfiguration und Änderung von Parametern ermöglicht. Dies wiederum bedeutet, dass der Techniker Informationen bezüglich des Gerätes und des installierten Betriebssystems sowie der relevanten Parameter benötigt. Zudem ist ein Wissen der Passwörter und ggf. der RSA-Schlüssel bzw. der Krypto-Schlüssel, die den aktuellen Sicherheitsstandards entsprechen, welche benutzt werden, um eine Verbindung mittels des SSH-Protokolls herzustellen, erforderlich. Da diese sicherheitsrelevanten Informationen in der Regel auf dem Computer des Technikers gespeichert sind, stellt dies ein Sicherheitsrisiko dar.

Weiterer Stand der Technik ist in der Europäischen Patentanmeldung EP1737194A1 offenbart.

Der vorliegenden Erfindung liegt die Aufgabe zugrunde, ein Verfahren zur Herstellung einer "Zero Knowledge"-Verbindung zwischen einem elektronischen Gerät und einem Computer herzustellen, durch dessen Durchführung die oben erwähnten aus dem Stand der Technik bekannten Nachteile vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Herstellung einer "Zero Knowledge"-Verbindung zwischen einem Computer und einem elektronischen Gerät vorgeschlagen, im Rahmen dessen ein Konfigurationsgerät verwendet wird, welches mit einem Computer zum Zweck der Datenkommunikation verbindbar ist und eine eigene CPU, eigene Speichermittel und Software sowie ein sogenanntes Trusted Execution Environment aufweist, nämlich einen Bereich im nichtflüchtigen Speicher und/oder in der CPU, auf den nur speziell dafür freigeschaltete Software Zugriff hat, wodurch eine sichere Ausführungsumgebung für diese Software zur Verfügung gestellt wird. Ein derartiges Trusted Execution Environment ist beispielsweise von der Firma ARM unter der Bezeichnung TrustZone entwickelt worden.

Zu Beginn des Verfahrens wird das Konfigurationsgerät, welches vorzugsweise als USB-Stick ausgeführt ist, mit dem Computer zum Zweck der Datenkommunikation verbunden, wobei anschließend im Konfigurationsgerät mittels des Trusted Execution Environment automatisch ein Webserver gestartet wird, welcher über das Konfigurationsgerät nur mittels eines emulierten Ethernetports erreichbar ist. Anschließend wird mittels des Konfigurationsgerätes eine sichere Netzwerkverbindung, beispielsweise eine VPN-Verbindung, zu einem Server hergestellt, wobei mittels dieser Verbindung die im Server gespeicherten erforderlichen Informationen zur Verbindung mit den elektronischen Geräten, zu denen eine Verbindung hergestellt werden kann, mit dem Trusted Execution Environment des Konfigurationsgeräts 1 synchronisiert werden.

Die benötigen Informationen bezüglich der elektronischen Geräte, zu denen eine Verbindung hergestellt werden kann, werden mittels des Trusted Execution Environment auf dem Konfigurationsgerät gespeichert. Nachdem die zur Verbindung mit einem elektronischen Gerät erforderlichen Informationen synchronisiert sind (die Informationen können beispielsweise einen RSA-Schlüssel, ein Passwort, Netzwerkparameter und Umgebungsvariablen enthalten), wird mittels des Webservers über Eingabemittel des Computers, beispielsweise über die Tastatur oder eine Maus, ein elektronisches Gerät ausgewählt, zu dem eine Verbindung mittels der gespeicherten Informationen hergestellt wird, wobei mittels des Webservers durch Benutzung der Anzeigevorrichtung und der Eingabemittel des Computers menügesteuert vorgegebene Wartungs- oder Konfigurationsschritte durchgeführt werden.

Das Konfigurationsgerät kann vorzugsweise lediglich über den Port 443 (https) oder 80 (http) erreicht werden, wobei der Webserver, welcher mittels des Trusted Execution Environment auf dem Konfigurationsgerät läuft, nur mittels einer emulierten Ethernetverbindung erreicht werden kann. Sämtliche Interaktionen zwischen dem Techniker und somit dem Computer und dem elektronischen Gerät werden mittels des Webservers ermöglicht, welcher im Trusted Execution Environment auf dem Konfigurationsgerät ausgeführt wird.

Die Verbindung zwischen dem Konfigurationsgerät und dem elektronischen Gerät erfolgt gemäß der Erfindung mittels einer über das Trusted Execution Environment laufende SSH-Protokoll-Verbindung.

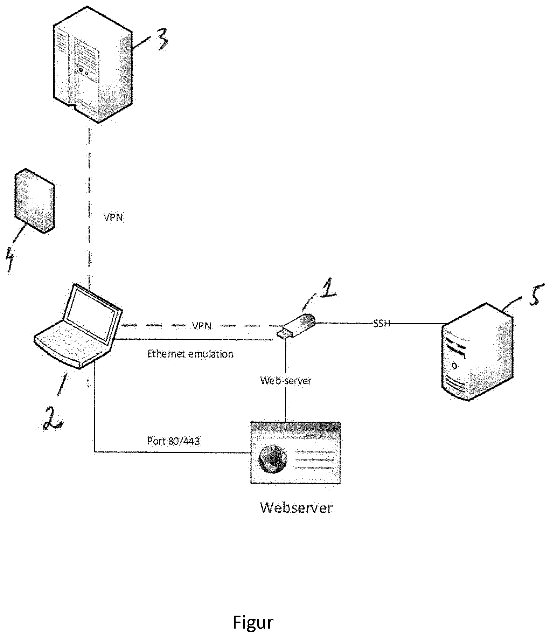

Die Erfindung wird im Folgenden anhand der beigefügten Figur, welche die zur Durchführung des Verfahrens erforderlichen Komponenten schematisch darstellt, beispielhaft näher erläutert.

Gemäß der Erfindung und bezugnehmend auf die beigefügte Figur wird zur Durchführung des Verfahrens ein Konfigurationsgerät 1 verwendet, welches mit einem Computer 2 zum Zweck der Datenkommunikation verbindbar ist und eine eigene CPU, eigene Speichermittel und Software sowie ein Trusted Execution Environment aufweist.

Zu Beginn des Verfahrens wird das Konfigurationsgerät, welches bei dem gezeigten Beispiel als USB-Stick ausgeführt ist, mit dem Computer 2 eines Technikers zum Zweck der Datenkommunikation verbunden, wobei anschließend im Konfigurationsgerät 1 mittels des Trusted Execution Environment automatisch ein Webserver gestartet wird, der über das Konfigurationsgerät 1 mittels eines emulierten Ethernetports über den Port 443 (https) oder 80 (http) erreicht wird. Im Rahmen weiterer Ausgestaltungen kann die Verbindung zwischen einem Konfigurationsgerät und dem Computer kabellos erfolgen.

In einem nächsten Schritt wird mittels des Konfigurationsgerätes 1 ggf. über eine Firewall 4 eine VPN-Verbindung zu einem Server 3 hergestellt, wobei mittels der VPN-Verbindung die erforderlichen Informationen zur Verbindung mit den elektronischen Geräten, zu denen eine Verbindung hergestellt werden kann, mit dem Trusted Execution Environment des Konfigurationsgeräts 1 synchronisiert werden. Insbesondere werden u.a. RSA-Schlüssel bzw. Krypto-Schlüssel, die den aktuellen Sicherheitsstandards entsprechen, Passwörter, Netzwerkparameter und Umgebungsvariablen synchronisiert.

Nach erfolgter Synchronisation, wird durch den Techniker mittels des Webservers über Eingabemittel des Computers 2, beispielsweise über die Tastatur oder eine Maus, ein elektronisches Gerät 5 ausgewählt, zu dem eine Verbindung mittels des SSH-Protokolls über das Trusted Execution Environment des Konfigurationsgeräts 1 unter Verwendung der gespeicherten, synchronisierten Informationen hergestellt wird, wobei mittels des Webservers durch Benutzung der Anzeigevorrichtung und der Eingabemittel des Computers 2 menügesteuert vorgegebene Wartungs- oder Konfigurationsschritte durchgeführt werden können.

Durch die erfindungsgemäße Konzeption wird eine "Zero Knowledge"-Verbindung zwischen einem Computer 2 und einem elektronischen Gerät 5 hergestellt; sicherheitsrelevante Informationen, wie z.B. Passwörter, RSA-Schlüssel etc. werden über eine VPN-Verbindung im Trusted Execution Environment des Konfigurationsgeräts 1 synchronisiert und bei Bedarf über das Trusted Execution Environment über das SSH-Protokoll automatisch eingegeben, so dass diese dem Techniker nicht bekannt sind und in vorteilhafter Weise nicht auf dem Computer 2 gespeichert werden.

## Patentansprüche

1. Verfahren zur Herstellung einer "Zero Knowledge"-Verbindung zwischen einem Computer (2) und einem elektronischen Gerät (5), **dadurch gekennzeichnet, dass** ein Konfigurationsgerät (1) verwendet wird, welches mit einem Computer (2) zum Zweck der Datenkommunikation verbindbar ist und eine eigene CPU, eigene Speichermittel und Software sowie ein Trusted Execution Environment aufweist, wobei zu Beginn des Verfahrens das Konfigurationsgerät (1) mit dem Computer (2) verbunden wird und anschließend im Konfigurationsgerät (1) mittels des Trusted Execution Environment ein nur mittels eines emulierten Ethernetports erreichbarer Webserver gestartet wird, wobei anschließend mittels des Konfigurationsgerätes (1) eine sichere Netzwerkverbindung zu einem Server (3) hergestellt wird und mittels der sicheren Netzwerkverbindung die erforderlichen Informationen zur Verbindung mit den elektronischen Geräten, zu denen eine Verbindung hergestellt werden kann, mit dem Trusted Execution Environment des Konfigurationsgeräts (1) synchronisiert werden, wobei nach erfolgter Synchronisation mittels des Webservers über Eingabemittel des Computers (2) ein elektronisches Gerät (5) ausgewählt wird, zu dem eine Verbindung mittels des SSH-Protokolls über das Trusted Execution Environment des Konfigurationsgeräts (1) unter Verwendung der gespeicherten, synchronisierten Informationen hergestellt wird, wobei mittels des Webservers menügesteuert vorgegebene Wartungs- oder Konfigurationsschritte durchführbar sind.

2. Verfahren zur Herstellung einer "Zero Knowledge"-Verbindung zwischen einem Computer (2) und einem elektronischen Gerät (5) nach Anspruch 1, **dadurch gekennzeichnet, dass** sämtliche Interaktionen zwischen dem Computer (2) und dem elektronischen Gerät (5) mittels des Webservers ermöglicht werden, welcher im Trusted Execution Environment auf dem Konfigurationsgerät (1) ausgeführt wird.

3. Verfahren zur Herstellung einer "Zero Knowledge"-Verbindung zwischen einem Computer (2) und einem elektronischen Gerät (5) nach Anspruch 1 oder 2, **dadurch gekennzeichnet, dass** das Konfigurationsgerät (1) als USB-Stick ausgeführt ist.

## Claims

1. A method for establishing a "zero-knowledge" connection between a computer (2) and an electronic device (5), **characterised in that** a configuration device (1) is used, which can be connected to a computer (2) for the purpose of data communication, and which comprises its own CPU, own storage means and software as well as a "trusted execution environment", wherein at the beginning of the process the configuration device (1) is connected to the computer (2), and subsequently a webserver reachable only by means of an emulated Ethernet port is started in the configuration device (1) by means of the trusted execution environment, wherein subsequently a secure network connection to a server (3) is established by means of the configuration device (1) and, using the secure network connection, the required information for connection to the electronic devices, to which a connection can be established, is synchronised with the trusted execution environment of the configuration device (1), wherein following synchronisation by means of the webserver, an electronic device (5) is selected via input means of the computer (2), to which a connection is established by means of the SSH protocol via the trusted execution environment of the configuration device (1), using the stored synchronised information, wherein predefined maintenance or configuration steps can be performed under menu control by means of the webserver.

2. The method for establishing a "zero-knowledge" connection between a computer (2) and an electronic device (5) according to claim 1, **characterised in that** all interactions between the computer (2) and the electronic device (5) are made possible by means of the webserver, which is executed in the trusted execution environment on the configuration device (1).

3. The method for establishing a "zero-knowledge" connection between a computer (2) and an electronic device (5) according to claim 1 or 2, **characterised in that** the configuration device (1) is realised as a USB stick.

## Revendications

1. Procédé d'établissement d'une liaison « à divulgation nulle de connaissance » entre un ordinateur (2) et un appareil électronique (5), **caractérisé en ce que** un appareil de configuration (1) est utilisé, qui peut être relié avec un ordinateur (2) à des fins de communication de données et présente une UC propre, une mémoire propre et un logiciel ainsi qu'un environnement d'exécution de confiance, dans lequel au début du procédé l'appareil de configuration (1) est relié avec l'ordinateur (2)et ensuite un serveur Web pouvant être atteint au moyen d'un port Ethernet émulé est démarré dans l'appareil de configuration (1) au moyen de l'environnement d'exécution de confiance, dans lequel ensuite au moyen de l'appareil de configuration (1) une liaison de réseau sécurisée est établie vers un serveur (3) et, au moyen de la liaison de réseau sécurisée, les informations nécessaires pour la liaison aux appareils électroniques, vers lesquels une liaison peut être établie, sont synchronisées avec l'environnement d'exécution de confiance de l'appareil de configuration (1), dans lequel après une synchronisation réussie au moyen du serveur Wen par l'intermédiaire d'un moyen d'entrée de l'ordinateur (2) un appareil électronique (5) est sélectionné, vers lequel une liaison au moyen du protocole SSH est établie par l'intermédiaire de l'environnement d'exécution de confiance de l'appareil de configuration (1) en utilisant les informations synchronisées mémorisées, dans lequel au moyen du serveur Web des étapes de maintenance ou de configuration prescrites commandées par menu peuvent être effectuées.

2. Procédé d'établissement d'une liaison « à divulgation nulle de connaissance » entre un ordinateur (2) et un appareil électronique (5) selon la revendication 1, **caractérisé en ce que** toutes les informations entre l'ordinateur (2) et l'appareil électronique (5) sont rendues possibles au moyen du serveur Web, qui est exécuté sur l'appareil de configuration (1) dans l'environnement d'exécution de confiance.

3. Procédé d'établissement d'une liaison « à divulgation nulle de connaissance » entre un ordinateur (2) et un appareil électronique (5) selon la revendication 1 ou 2, **caractérisé en ce que** l'appareil de configuration (1) est conçu comme une clé USB.
